(19) Europäisches Patentamt

European Patent Office

Office européen des brevets

(11) Veröffentlichungsnummer : **0 066 686**
**B1**

(12) **EUROPÄISCHE PATENTSCHRIFT**

(45) Veröffentlichungstag der Patentschrift :
04.07.84

(21) Anmeldenummer : 82102969.1

(22) Anmeldetag : 07.04.82

(51) Int. Cl.³ : **C 08 J  9/20, C 08 K  5/15 //
(C08J9/20, C08L25/00)**

(54) Verfahren zur Herstellung von schwerentflammbaren expandierbaren Styrolpolymerisaten.

(30) Priorität : 05.06.81 DE 3122341

(43) Veröffentlichungstag der Anmeldung :
15.12.82 Patentblatt 82/50

(45) Bekanntmachung des Hinweises auf die Patenterteilung : 04.07.84 Patentblatt 84/27

(84) Benannte Vertragsstaaten :
**AT BE DE FR GB IT NL SE**

(56) Entgegenhaltungen :
**DE-A- 2 104 867
US-A- 4 032 481**

(73) Patentinhaber : **CHEMISCHE WERKE HÜLS AG
- RSP Patente / PB 15 - Postfach 13 20
D-4370 Marl 1 (DE)**

(72) Erfinder : **Rigler, Josef Karl, Dr.
Helgolandstrasse 16
D-4350 Recklinghausen (DE)**
Erfinder : **Wienhöfer, Ekkehard, Dr.
Griesheimer Strasse 12 .
D-4370 Marl (DE)**
Erfinder : **Leithäuser, Horst, Dr.
Langehegge 151
D-4370 Marl (DE)**
Erfinder : **Trukenbrod, Karl, Dr.
Leunaer Strasse 32
D-4370 Marl (DE)**

**Beschreibung**

Schaumstoffkörper werden in der Technik durch Expandieren feinteiliger, expandierbarer Styrolpolymerisate in Formen hergestellt. Bei diesem Verfahren werden die feinteiligen Styrolpolymerisate zunächst mit Wasserdampf oder heißen Gasen auf Temperaturen oberhalb ihres Erweichungspunktes erhitzt, so daß ein Aufschäumen zu diskreten Teilchen eintritt. Diesen Vorgang, bei dem den Teilchen zur freien Expansion genügend Raum zur Verfügung steht, nennt man Vorschäumen. Die vorgeschäumten Styrolpolymerisate werden zunächst abgelagert und dann in einer druckfesten, jedoch nicht gasdichten Form durch erneutes Erhitzen mit Dampf weiter expandiert, wobei, bedingt durch die Raumbegrenzung, die Teilchen miteinander zu einem dem Innenhohlraum der verwendeten Form entsprechenden Formkörper verschweißen. Dieser zweite Arbeitsgang wird als Ausschäumen bezeichnet. Der Formkörper kann erst dann ohne Deformation aus der Form genommen werden, wenn er auch im Innern auf Temperaturen unterhalb des Erweichungspunktes abgekühlt ist. Man bezeichnet den Zeitraum, nach dem man frühestens einen Formkörper der Form entnehmen kann, ohne daß dieser nachbläht, üblicherweise als Mindestformverweilzeit. Als Kriterium für die Entformbarkeit kann auch der Abbau des Innendruckes auf nahezu Atmosphärendruck dienen. Der Formkörper wird nach dem Herausnehmen aus der Form meist noch einige Zeit lang bis zum vollständigen Abkühlen gelagert und kann dann zu Schaumstoffplatten für Wärmeisolierzwecke geschnitten werden.

Bei der Herstellung der expandierbaren Styrolpolymerisate entstehen, besonders wenn eine flammhemmende organische Halogenverbindung zugesetzt wurde, Produkte mit unregelmäßiger Zellstruktur. Derartige Schaumstoffblöcke neigen nicht nur einige Zeit nach dem Entformen zum stärkeren Einfallen ihrer Seitenflächen (Blockschrumpf), sondern sind auch im Blockinneren schwächer verschweißt. Dadurch haben die aus einem Block geschnittenen Schaumstoffplatten unterschiedliche Qualität. Außerdem müssen die an den Seitenflächen ausgefallenen Blöcke besäumt werden, wodurch unerwünschter Abfall entsteht.

Ein weiteres Problem tritt beim Vorschäumen auf, da ein Teil der Vorschaumperlen schrumpft, wodurch gewünschte niedrige Dichten nicht eingestellt werden können. Der Schrumpf der Vorschaumperlen ist mit einem hohen Verlust an Triebmittel verbunden, was die oben erwähnte ungleichmäßige Verschweißung und damit das Einfallen der Blöcke an den Seitenflächen fördert. Darüberhinaus bekommt die Oberfläche der Fertigteile ein ungleichmäßiges Aussehen, was besonders bei der Herstellung von Sichtplatten stört.

Aus der DE-AS 21 04 867 ist bekannt, daß der Zusatz von Hydroxylaminen zu expandierbaren Styrolpolymerisaten, die durch organische Halogenverbindungen selbstverlöschend ausgerüstet sind, die oben erwähnten Verarbeitungsprobleme verbessert werden. Die DE-AS 25 20 635 beschreibt eine ähnliche Wirkung durch die Zugabe geringer Mengen an hydroxylgruppenfreien Aminen und in der DE-OS 28 07 710 werden mit Aminen substituierte Triazinderivate zur Behebung der bekannten Verarbeitungsprobleme beansprucht.

Alle diese Zusätze bewirken zwar in manchen Fällen eine deutliche Verbesserung der Produkteigenschaften. Es werden jedoch dadurch noch keine voll befriedigenden Produkte erhalten. Vor allem ist die schlechte Reproduzierbarkeit der Produkteigenschaften störend.

Die Aufgabe der Erfindung bestand darin, Verbindungen zu finden, die schon in geringen Konzentrationen das Auftreten der oben erwähnten Mängel, wie unregelmäßige Zelligkeit, Verschweißung und Blockschrumpf, verhindern. Darüber hinaus sollen diese Zusatzstoffe durch die zur Herstellung notwendigen Polymerisationshilfsstoffe, wie Initiatoren, Suspensionshilfsmittel bzw. durch sonstige Zusätze, wie Flammschutzmittel, Treibmittel in ihrer Wirkung nicht beeinträchtigt werden, so daß die erzielte Produktqualität reproduzierbar einzustellen ist.

Es wurde nun gefunden, daß in den zu polymerisierenden Monomeren lösliche Epoxidierungsprodukte aliphatischer Kohlenwasserstoffe, deren epoxidierte aliphatische Kette 6 bis 18, insbesondere 10 bis 14 Kohlenstoffatome aufweist, die wichtigen Verarbeitungseigenschaften « Verschweißungsgüte » und « Blockschrumpf » von Schaumstoffblöcken aus expandierbarem, organische Halogenverbindungen enthaltende Styrolpolymerisate günstig beeinflussen und die mit dem Aminzusatz verbundenen, beschriebenen Nachteile nicht aufweisen. Die nach dem Verfahren der Erfindung erhaltenen Styrolpolymerisate haben eine höhere Verarbeitungsbreite, d. h. bei verschiedenen Dampfdrücken beim Ausschäumen in der Form werden stets Schaumstoffblöcke mit guter Verschweißung und ausgezeichneter Oberflächenbeschaffenheit erhalten.

Epoxidierungsprodukte von aliphatischen Kohlenwasserstoffen im Sinne der Erfindung sind sowohl solche, die von geradkettigen als auch verzweigten Kohlenwasserstoffen ausgehen. Die Epoxigruppe kann sowohl endständig, als auch innerhalb der Kette sowohl ein- als auch mehrfach vorhanden sein.

Geeignete Epoxidierungsprodukte sind beispielsweise 1,2-Epoxihexan, 3,4-Epoxiheptan, 1,2-Epoxioctan, 1,2-Epoxidecan, 1,2-Epoxiundecan, 1,2-Epoxidodecan, 1,2-Epoxitetradecan, 1,2-Epoxihexadecan, 1,2-Epoxioctadecan, insbesondere 1,2-Epoxidodecan, 1,2-Epoxitetradecan, 1,2-Epoxihexadecan, verzweigtkettige 1,2-Epoxi-2-butyloctan, 1,2-Epoxibutyldecan.

Auch können der Epoxidierung Kohlenwasserstoffgemische, wie entsprechende $C_{12}/C_{13}$-Schnitte, zugrundegelegt werden, solche als $\mu C_{12}/C_{13}$-Epoxialkane bezeichneten Produkte besitzen sowohl endständige als auch über die Kette verteilte Epoxigruppen.

Als Epoxidierungsprodukte mit mehrfachen Epoxigruppen seien beispielsweise genannt : 1,2,5,6-bis-Epoxihexan, 1,2,9,10-bis-Epoxidecan und 1,2,7,8-bis-Epoxioctan.

Die Herstellung der Epoxidierungsprodukte, für die im Rahmen dieser Erfindung kein Schutz begehrt wird, erfolgt nach bekannten Verfahren, wie sie beschrieben sind in z. B. Swern, Organic Peroxides Vol II, pp. 355-533 (1971) oder DE-AS 24 36 817 oder insbesondere Weigert, Chemikerzeitung Nr. 99, Seite 109 (1975).

Das Verfahren zur Herstellung der eine organische Halogenverbindung sowie ein Treibmittel enthaltenden Styrolpolymerisate erfolgt in an sich bekannter Weise durch Polymerisation von Styrol und gegebenenfalls üblichen Comonomeren in wäßriger Suspension mittels radikalbildender Initiatoren bei Temperaturen von über 80 °C in Gegenwart von flammhemmenden organischen Halogenverbindungen und Treibmitteln, wobei vor oder während der Polymerisation das in der organischen Phase der Suspension lösliche Epoxidierungsprodukt den aliphatischen Kohlenwasserstoffen zugesetzt wird.

Für die Wirksamkeit der beanspruchten Epoxide scheint neben der guten Löslichkeit in der organischen Phase der Suspension eine gute Löslichkeit der zugesetzten organischen Halogenverbindung (Flammschutzmittel) in dem Epoxid eine gewisse Rolle zu spielen.

Die beanspruchten Epoxide werden in Mengen von 0,000 1 bis 0,1, vorzugsweise jedoch von 0,001 bis 0,05 Gewichtsprozent, bezogen auf die zu polymerisierenden Monomeren, eingesetzt. In jedem Fall ist die zu verwendende Menge, gemessen an der Menge der zugesetzten organischen Halogenverbindung gering. Man kann die Substanzen entweder der organischen Phase oder der Reaktionsmischung vor oder während bis gegen Ende der Polymerisation zusetzen, wobei ein Zusatz des Epoxides während der Polymerisation bei einem Umsatz von 50 bis 90 % eventuell zusammen mit dem Treibmittel bevorzugt wird. Die Menge an Epoxid bzw. der Zeitpunkt des Zusatzes ist unabhängig von der Temperaturführung der Polymerisation bzw. unabhängig von der Art des verwendeten Initiators. Die Menge und die Art des Epoxides richten sich aber nach der Art der inkorporierten Halogenverbindung, was experimentell leicht zu ermitteln ist.

Ausgangsstoffe bei der Herstellung der erfindungsgemäßen Styrolpolymerisate sind Monomergemische, die mindestens 50 Gewichtsprozent Styrol und ggf. als Mischpolymerisationskomponenten z. B. α-Methylstyrol, kernhalogenierte Styrole, Acrylnitril, Ester der Acryl- und Methacrylsäure von Alkoholen mit 1 bis 8 Kohlenstoffatomen, N-Vinylverbindungen, wie N-Vinylcarbazol oder auch geringe Mengen Butadien oder Divinylbenzol enthalten.

Die Polymerisation wird zweckmäßig nach dem an sich bekannten Perlpolymerisationsverfahren bei Temperaturen von 80 bis 130 °C durchgeführt. Sie wird in üblicher Weise mit einer oder mehreren radikalbildenden Substanzen initiiert, wobei t-Butylperbenzoat, t-Butylperoctoat, Di-t-butylperoxid, Dibenzoylperoxid oder deren Mischungen als Beispiele genannt seien.

Als organische Halogenverbindungen werden insbesondere Bromverbindungen, wie die bromierten Oligomeren des Butadiens oder des Isoprens mit einem mittleren Polymerisationsgrad von 2 bis 20 verwendet, wobei die Bromierung vollständig oder partiell sein kann : 1,2,5,6-Tetrabromcyclooctan, 1,2,5,6,9,10-Hexabromcyclododecan, bromiertes Polybutadien mit einem Polymerisationsgrad von z. B. 3 bis 15. Die organischen Halogenverbindungen können in Mengen von 0,05 bis 1 Gewichtsprozent, bei Einsatz als Flammschutzmittel in Mengen von 0,4 bis 3 Gewichtsprozent im expandierbaren Styrolpolymerisat enthalten sein. Zusätzlich zu Halogenverbindungen als Flammschutzmittel können die bekannten Synergisten in üblichen Mengen eingesetzt werden, vorzugsweise organische Peroxide, insbesondere solche mit einer Halbwertszeit von mindestens zwei Stunden bei 373 K.

Als Suspensionsstabilisatoren können organische Schutzkolloide, wie Polyvinylalkohol, Polyvinylpyrrolidon oder Polyvinylpyrrolidoncopolymerisate oder mineralische Suspensionshilfsmittel, wie fein verteiltes Tricalzium-phosphat, Bariumphosphat usw., verwendet werden.

Als Treibmittel werden für das erfindungsgemäße Verfahren z. B. aliphatische Kohlenwasserstoffe, wie Propan, Butan, Pentan, Hexan, cycloaliphatische Kohlenwasserstoffe, wie Cyclohexan, oder Halogenkohlenwasserstoffe, wie Dichlordifluormethan, 1,2,2-Trifluor-1,1,2-trichlorethan eingesetzt. Auch Mischungen dieser Verbindungen können verwendet werden. Die Menge an Treibmittel liegt bei 3 bis 15 Gewichtsprozent, vorzugsweise zwischen 5 und 8 Gewichtsprozent bezogen auf das Styrolpolymerisat.

Die expandierbaren Styrolpolymerisate können außerdem Zusatzstoffe, wie Farbstoffe, Füllstoffe und Stabilisierungsmittel enthalten. Sie liegen nach der Herstellung in feinteiliger Form vor (z. B. Perlform) und haben im allgemeinen einen Teilchendurchmesser von 0,4 bis 3 mm. Sie werden nach dem üblichen Verfahren in vorgeschäumtem Zustand durch Erhitzen in Formen, welche nicht gasdicht schließen, weiter aufgeschäumt und zu Schaumstoffkörpern versintert, die in ihren Ausmaßen dem Innenhohlraum der verwendeten Formen entsprechen. Die erfindungsgemäßen Styrolpolymerisate können zu außerordentlich formstabilen Formkörpern verarbeitet werden. Schaumstoffblöcke der Maße 1 × 1 × 0,5 m neigen nach dem Entformen nur in äußerst geringem Maß zum Einfallen der Seitenflächen. Die Schaumstoffkörper oder -blöcke sind weiterhin durch besonders gute Verschweißung der einzelnen Teilchen gekennzeichnet. Sie besitzen daher eine besonders gute mechanische Stabilität.

Beispiele

In einem druckfesten Rührkessel aus korrosionsfreiem Stahl wurde jeweils eine Mischung aus 100 Gewichtsteilen vollentsalztem Wasser, 100 Gewichtsteilen Styrol, 0,4 Gewichtsteilen Benzoylperoxid, 0,1 Gewichtsteilen tert.-Butylperbenzoat, 0,75 Gewichtsteilen Hexabromcyclododecan, 0,30 Gewichtsteilen Dicumylperoxid sowie die in der Tabelle 1 angegebene Menge der entsprechenden Epoxialkane (in Styrol gelöst) unter Rühnen auf 90 °C erhitzt. Nach 2 Stunden bei 90 °C wurden 5 Teile einer 2 %igen wäßrigen Lösung von Polyvinylalkohol mit einer Verseifungszahl von 140 zugegeben. Nach weiteren 2 Stunden erfolgte die Zugabe von 7 Gewichtsteilen eines Gemisches aus 25 Gewichtsprozent iso- und 75 Gewichtsprozent n-Pentan innerhalb von 10 bis 15 Minuten. Der Ansatz wurde nach einer weiteren Stunde bei 90 °C auf 120 °C aufgeheizt und 6 Stunden bei dieser Temperatur gehalten.

Nach Beendigung des Polymerisationszycluses wurde abgekühlt, das entstandene Perlpolymerisat von der wäßrigen Phase abgetrennt, getrocknet und gesiebt.

Die Perlfraktion zwischen 1 und 2 mm Durchmesser wurde in einem kontinuierlichen Rührvorschäumer Typ Rauscher mit strömendem Wasserdampf auf ein Schüttgewicht von 15 g/l vorgeschäumt, 24 Stunden zwischengelagert und anschließend in einer Blockform mit den Abmessungen 100 × 50 × 100 cm Typ Rauscher bei unterschiedlichen Dampfdrücken zu Schaumstoffblöcken ausgeschäumt. Die Prüfwerte sind in der Tabelle 1 zusammengestellt. Jedes Beispiel wurde mindestens 5mal wiederholt. Neben den Prüfwerten sind die Standardabweichungen angegeben, die bei den Vergleichsbeispielen eindeutig höher sind als bei den Erfindungsbeispielen.

(Siehe Tabelle 1 Seite 5 ff.)

4

Tabelle 1

1. Erfindungsbeispiele

| Zusatz | Zusatz-menge Gew.-% | Schüttgew. Zunahme $g/l^{1)}$ | Bedampfgs. Zeit $sek.^{2)}$ | Dampf-druck $bar^{3)}$ | Verschw.-grad $\%^{4)}$ | Block-schrumpf $\%^{5)}$ | Block-oberfl.[6] | Zellstrukt. Zellen/mm[7] |
|---|---|---|---|---|---|---|---|---|
| $\mu-C_{12}/C_{13}-$ Epoxialkan | 0,01 | 0,4 ± 0,2 | 20 | 1,8 | 80 ± 10 | 0,4 ± 0,2 | gut | 4 bis 6 |
| | | | 50 | 1,5 | 90 ± 10 | 0,3 ± 0,1 | gut | 4 bis 6 |
| | | | 20 | 1,5 | 80 ± 10 | 0,5 ± 0,2 | gut | 4 bis 6 |
| | 0,005 | 0,8 ± 0,2 | 20 | 1,8 | 80 ± 10 | 0,6 ± 0,2 | gut | 4 bis 8 |
| | | | 50 | 1,5 | 80 ± 10 | 0,6 ± 0,2 | gut | 4 bis 8 |
| | | | 20 | 1,5 | 70 ± 20 | 0,6 ± 0,2 | gut | 4 bis 8 |
| 1,2,9,10-bis- Epoxidecan | 0,005 | 0,5 ± 0,2 | 20 | 1,8 | 80 ± 10 | 0,5 ± 0,3 | gut | 4 bis 8 |
| 1,2-Epoxi- tetradecan | 0,005 | | 20 | 1,8 | 80 ± 10 | 0,4 ± 0,2 | gut | 4 bis 8 |
| $\mu-C_{12}/C_{13}-$ Epoxialkan in Pentan gelöst | 0,005 | 0,4 ± 0,2 | 20 | 1,8 | 80 ± 10 | 0,4 ± 0,2 | gut | 4 bis 6 |
| | | | 50 | 1,5 | 90 ± 10 | 0,3 ± 0,1 | gut | 4 bis 6 |
| | | | 20 | 1,5 | 80 ± 10 | 0,5 ± 0,2 | gut | 4 bis 6 |

0 066 686

Fortsetzung

## 2. Vergleichsbeispiele

| Zusatz | Zusatz-menge Gew.-% | Schüttgew. Zunahme g/l[1] | Bedampfgs. Zeit sek.[2] | Dampf-druck bar[3] | Verschw.-grad %[4] | Block-schrumpf %[5] | Block-oberfl.[6] | Zellstrukt. Zellen/mm[7] |
|---|---|---|---|---|---|---|---|---|
| N,N-Dicyclo-hexylamin | 0,005 | 0,5 ± 0,2 | 20 | 1,8 | 70 ± 30 | 0,5 ± 0,5 | gut | 2 bis 10 |
| | | | 20 | 1,5 | 60 ± 40 | 0,7 ± 0,5 | gut | 2 bis 10 |
| N-Tetradecyl-amin | 0,005 | 0,4 ± 0,2 | 20 | 1,8 | 60 ± 40 | 0,8 ± 0,7 | gut | 2 bis 10 |
| | | | 20 | 1,5 | 70 ± 20 | 0,6 ± 0,6 | gut | 2 bis 10 |
| 2,4-Diamino-6-nonyl-1,3,5-triazin | 0,005 | 0,8 ± 0,4 | 20 | 1,8 | 60 ± 40 | 1,0 ± 0,5 | gut | 10 bis 20 |
| | | | 20 | 1,5 | 70 ± 30 | 1,2 ± 0,6 | gut | 10 bis 20 |
| Bis-(hydroxi-ethyl)-dodecyl-amin | 0,05 | 1,0 ± 0,5 | 20 | 1,8 | 60 ± 40 | 1,5 ± 0,5 | gut | 2 bis 10 |
| | | | 20 | 1,5 | 60 ± 40 | 1,3 ± 0,5 | gut | 2 bis 10 |

[1] Schüttgewichtszunahme der vorgeschäumten Perlen nach pneumatischer Förderung in einem Silo und 24 Stunden Zwischenlagerung.

[2] Als Bedampfungszeit zählt die Zeit vom Erreichen des angegebenen Dampfdruckes in der Blockform bis zum Verschließen des Dampfzuführungsventils.

[3] Dampfdruck in der Blockform.

[4] Unter Verschweißungsgrad wird das Verhältnis der Zahl der durchgerissenen Partikel zur Gesamtzahl der Partikel × 100 (= Prozent) verstanden. Als Testobjekt dient eine Schaumstoffplatte der Maße 100 × 100 × 5 cm.

[5] Als Blockschrumpf wird das Einfallen der Seitenflächen verstanden, das 24 Stunden nach der Herstellung des Blockes gemessen wird. Der Blockschrumpf wird ermittelt, indem man die Blockdichte von der Mitte einer großen Seitenfläche zur gegenüberliegenden rechtwinkelig zu diesen Seitenflächen mißt. Die Differenz des lichten Formmaßes an dieser Stelle und der Blockdicke an dieser Stelle in Prozent des lichten Formmaßes umgerechnet ergibt den Blockschrumpf.

[6] Die Blockoberfläche wird als gut bezeichnet, wenn keine eingefallenen, wie geschmolzen aussehende Perlen darauf zu beobachten sind.

[7] Zur mikroskopischen Bestimmung der Zellzahl wurden pro Versuch aus dem Block an 10 verschiedenen Stellen Platten entnommen und ausgezählt. Die angegebenen Werte sind die jeweils höchsten und niedrigsten ermittelten Zellzahlen. Je näher die Werte nebeneinanderliegen, desto homogener ist die Zellstruktur des Blockes.

## Ansprüche

1. Verfahren zur Herstellung von schwerentflammbaren, expandierbaren Styrolpolymerisaten durch Polymerisation von Styrol und gegebenenfalls üblichen Comonomeren in wäßriger Suspension in Gegenwart von flammhemmenden organischen Halogenverbindungen mittels radikalbildender Initiatoren bei erhöhten Temperaturen unter Zusatz von Treibmitteln, dadurch gekennzeichnet, daß man vor oder während der Polymerisation 0,000 1 bis 0,1 Gewichtsprozent, bezogen auf die polymerisierenden Monomeren, eines in der organischen Phase der Suspension löslichen Epoxidierungsproduktes eines aliphatischen Kohlenwasserstoffes zusetzt, dessen epoxidierte aliphatische Kette 6 bis 18 Kohlenstoffatome aufweist.

2. Verfahren zur Herstellung von schwerentflammbaren, expandierbaren Styrolpolymerisaten nach Anspruch 1, dadurch gekennzeichnet, daß man das in den Monomeren lösliche Epoxidierungsprodukt in Mengen von 0,001 bis 0,05 Gewichtsprozent, bezogen auf die polymerisierenden Monomeren, zusetzt.

3. Verfahren zur Herstellung von schwerentflammbaren, expandierbaren Styrolpolymerisaten nach den Ansprüchen 1 bis 2, dadurch gekennzeichnet, daß die epoxidierte aliphatische Kette des Epoxidierungsproduktes 10 bis 14 Kohlenstoffatome aufweist.

## Claims

1. Processes for the production of expandable styrene polymers of low flammability by polymerisation of styrene, optionally with known comonomers, in aqueous suspension at elevated temperatures, in the presence of flame-inhibiting organic halogen compounds using radical-forming initiators and with the addition of expanding agents, characterised in that from 0.000 1 to 0.1 percent by weight, based on the monomer(s) being polymerized, of an epoxidation product of an aliphatic hydrocarbon is added before or during the polymerisation, said product having an epoxidised aliphatic chain of 6 to 18 carbon atoms and being soluble in the organic phase of the suspension.

2. Processes for the production of expandable styrene polymers of low flammability according to claim 1, characterised in that the epoxidation of product soluble in the monomer(s) is added in an amount of from 0.001 to 0.05 percent by weight based on the monomer(s) being polymerised.

3. Processes for the production of expandable styrene polymers of low flammability according to claims 1 or 2, characterised in that the epoxidised aliphatic chain of the epoxidation product has 10 to 14 carbon atoms.

## Revendications

1. Procédé de préparation de produits de polymérisation du styrène difficilement inflammables et expansibles par polymérisation de styrène et éventuellement de comonomères usuels en suspension aqueuse en présence de composés halogénés organiques retardateurs de combustion, au moyen de catalyseurs formant des radicaux libres, à des températures élevées, avec addition de porogènes, caractérisé par le fait qu'avant ou pendant la polymérisation on ajoute de 0,000 1 à 0,1 % en poids, relativement aux monomères à polymériser, d'un produit d'époxydation d'hydrocarbure aliphatique soluble dans la phase organique de la suspension et dont la chaîne aliphatique époxydée présente de 6 à 18 atomes de carbone.

2. Procédé de préparation de produits de polymérisation du styrène difficilement inflammables et expansibles selon la revendication 1, caractérisé par le fait que l'on ajoute le produit d'époxydation soluble dans les monomères à raison de 0,001 à 0,05 % en poids, relativement au monomères à polymériser.

3. Procédé de préparation de produits de polymérisation du styrène difficilement inflammables et expansibles selon les revendications 1 à 2, caractérisé par le fait que la chaîne aliphatique époxydée du produit d'époxydation présente de 10 à 14 atomes de carbone.